(19) Europäisches Patentamt
European Patent Office
Office européen des brevets

(11) **EP 2 140 136 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(21) Anmeldenummer: **08757969.4**

(22) Anmeldetag: **22.04.2008**

(51) Int Cl.:
***F03D 7/02*** *(2006.01)*

(86) Internationale Anmeldenummer:
**PCT/DE2008/000682**

(87) Internationale Veröffentlichungsnummer:
**WO 2008/131727 (06.11.2008 Gazette 2008/45)**

(54) **WINDENERGIEANLAGE**

WIND POWER PLANT

ÉOLIENNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.04.2007 DE 102007019513**

(43) Veröffentlichungstag der Anmeldung:
**06.01.2010 Patentblatt 2010/01**

(73) Patentinhaber: **Aerodyn Engineering GmbH 24768 Rendsburg (DE)**

(72) Erfinder: **SIEGFRIEDSEN, Sönke 24768 Rendsburg (DE)**

(74) Vertreter: **Lobemeier, Martin Landolf Boehmert & Boehmert Anwaltssozietät Niemannsweg 133 24105 Kiel (DE)**

(56) Entgegenhaltungen:
**EP-A- 1 340 910        WO-A-95/00757
DE-A1- 3 201 199       DE-C1- 19 717 059
NL-C2- 1 009 566       US-A- 5 746 576
US-A1- 2006 001 268**

**Beschreibung**

Die Erfindung betrifft eine Windenergieanlage mit einem Turm und einem auf dem Turm befestigten, wenigstens ein Rotorblatt aufweisenden Rotor und einer Energiewandlungseinheit zur Erzeugung elektrischer Energie aus der kinetischen Energie der natürlichen Luftbewegung.

Die Nutzung der Windenergie zur Erzeugung elektrischer Energie gewinnt zunehmend an Bedeutung. Eine technische Schwierigkeit bei dieser Art umweltverträglicher Energieerzeugung stellt jedoch die Unstetigkeit des Windes dar. Das bei der Windenergienutzung auftretende Problem, zeitweise nur wenig stark wehende Winde zur Energieerzeugung nutzen zu können, wird nämlich gleichzeitig konterkariert von dem Problem, dass ebenso sehr hohe Windgeschwindigkeiten auftreten können, bei denen die Windenergieanlagen abgeschaltet werden müssen, um einer Beschädigung der Windenergieanlagen durch die aerodynamischen Kräfte des Windes vorzubeugen. Eine Windenergieanlage wird aber nicht nur durch hohe Windgeschwindigkeit geschädigt, sondern auch durch die Turbulenzintensität der Windgeschwindigkeit. Dabei ist die Turbulenzintensität definiert als der Quotient aus Standardabweichungen der Windgeschwindigkeitsschwankung und dem Mittelwert der Windgeschwindigkeit

$$I = \frac{\sigma}{v_m}.$$

Für Gebiete auf der Erde, die nicht von tropischen Zyklonen betroffen sind und Windgeschwindigkeiten als Böenspitzenwerte nicht über 70 m/s aufweisen, gibt es technische Lösungen, die die Anlagen sicher vor Schäden schützen. In diesen Gebieten nimmt die Turbulenzintensität mit steigender Windgeschwindigkeit immer weiter ab. In einem schweren Orkan ist der Wert der Turbulenzintensität deutlich unter 10 %.

In Gebieten in denen tropische Zyklone vorkommen ist die Situation vollkommen anders. Wie Erfahrungen mit Windfarmen in Südchina während der letzten Jahre zeigen, sind Windenergieanlagen Zyklonen der Klassen 4 und 5, also Windgeschwindigkeit größer 60 m/s, nicht gewachsen, wenn das Auge des Zyklonen durch den Windpark wandert. Im Jahre 2006 sind in der Provinz Zhejiang von 28 Anlagen eines Windparks 25 stark beschädigt worden, wobei ca. 10 Anlagen nicht mehr zu verwenden waren. Dabei sind Rotorblätter abgebrochen, Gondeln vom Turm gestürzt, Türme abgeknickt, Turmflansche auseinander gerissen und sogar Fundamente aus dem Boden gezogen worden. Die maximalen Windgeschwindigkeiten sind mit 86 m/s gemessen worden. Die meisten Windenergieanlagen werden aber nur auf eine max. Windgeschwindigkeit $V_w$ von 60 m/s mit einem Sicherheitsfaktor auf die Lasten von 1,35 ausgelegt.

Die letzten Jahre haben gezeigt, dass die Anzahl der Zyklone stark zunimmt und damit auch die Gefahr von größeren Schäden in gefährdeten Windparks. Aufgrund der stark zunehmenden Verbreitung der Windenergienutzung weltweit werden auch zunehmend Windenergieanlagen in zyklongefährdeten Gebieten aufgestellt (z. B. Indien, China, Taiwan, Japan usw.).

Die Besonderheit in Zyklonen ist, dass in der Wand des Auges des Zyklons nicht nur die Windgeschwindigkeit stark ansteigt, sondern auch gleichzeitig die Turbulenzintensität extrem zunimmt. Die Windgeschwindigkeiten können 90-100 m/s erreichen bei gleichzeitig 60 % Turbulenzwertintensität. Ein Rotorblatt, das von einer solchen Luftbewegung quer zur Blattlängsachse getroffen wird hat keine Chance, dieses unbeschadet zu überstehen. Die aerodynamische Anregung durch eine so stark turbulente Strömung führt zu extremen Schwingungen der Blattstruktur in Schlag- und Schwenkrichtung, die sehr wahrscheinlich zu einer totalen Zerstörung führen werden.

Eine Dimensionierung der Struktur auf derart hohe Lasten würde zu sehr hohen Blattgewichten führen und auch die gesamte Anlage erheblich verteuern und damit die Wirtschaftlichkeit deutlich verschlechtern.

Ein besonderes Problem tritt auch auf, wenn es sich um Offshore-Anlagen handelt, die in zyklongefährdeten Gebieten aufgestellt werden. Da diese im Wasser vor der Küste aufgestellt werden, würden diese von den Zyklonen getroffen, wenn diese noch ungeminderte Energie aufweisen und die Windgeschwindigkeiten noch höher sind. Bei einer größeren Anzahl von Offshore-Windparks in diesen Gebieten besteht eine hohe Wahrscheinlichkeit, dass es jedes Jahr zu erheblichen Schäden kommen wird. Dieses ist nicht akzeptabel, da die Betriebs- und Reparaturkosten extrem steigen würden und in der Folge Versicherungen solche Projekte nicht versichern und Banken ein solches Vorhaben nicht finanzieren würden.

Es sind, wie beispielsweise aus der US 5 746 576 bekannt, bereits verschiedene Maßnahmen vorgeschlagen, die bei sehr hohen Windlasten die Rotorblätter und / oder den Rotor bzw. die Gondel in eine Position verfahren, in der diese Komponenten der Windenergieanlage dem Wind eine geringe Angriffsfläche bieten und somit eine Position mit einem geringen Windwiderstand einnehmen. Beispielsweise zeigt die DE 100 58 076 A1 eine derartige Anlage, die bei auftretendem starken Wind die Rotorblätter senkrecht zur Windrichtung in Fahnenstellung bringt und bei zunehmender Windstärke den Rotor von der Luv- in die Leestellung dreht. Damit kann sich die Anlage dem Wind nachführen und bietet damit für die Gesamtanlage den geringsten Windwiderstand. Betrachtet man aber das einzelne Rotorblatt, so kann dieses abhängig von der Rotorposition trotzdem quer zur Längsachse angeströmt werden. Durch die hohen Turbulenzen in einem Zyklon kommt es damit trotzdem zu einer starken Anregung der Struktur. Eine Zerstörung ist weiterhin sehr wahrscheinlich.

Eine weitere aus der EP 0 709 571 A2. bekannte Erfindung verbringt die Gondel mit einem Zweiblattrotor in eine Position gegenüber der Windrichtung, sodass das eine Blatt von der Blattspitze angeströmt wird: Der Ansatz zur entscheidenden Verminderung der Lasten ist zwar gegeben, in der Praxis würde das System aber nicht funktionieren, da das System instabil ist. Eine Windrichtungsabweichung gegenüber der Blattlängsachse würde Zusatzmomente erzeugen, die die aktive Windrichtungsnachführung hochdynamisch ausregeln muss. Gelingt dies nicht schnell genug, werden die Momente, die den Rotor quer zur Windrichtung in Lee des Turmes drehen wollen, immer größer und das System wird instabil. Die Bedingungen eines Zyklons wird eine solche Konfiguration auch nicht überstehen.

Aufgabe der Erfindung ist es daher eine Windenergieanlage zu schaffen, die bei extremen Windgeschwindigkeiten und Turbulenzen, wie sie in Zyklonen herrschen, die Rotorblätter in eine Position gegenüber der mittleren Windrichtung zu bringen, bei der die Anströmung des Rotorblatts im wesentlichen nur in Richtung der Blattlängsachse stattfindet und die hoch belastete Queranströmung mit gefährlicher Lastanregung vermeidet und sich das Rotorblatt selbständig auch bei Windrichtungsdrehung stabil in dieser lastarmen Position nachführt, sodass die Belastung für die gesamte Anlage auf diese Weise minimiert wird.

Die Aufgabe wird gelöst durch eine Windenergieanlage mit den Merkmalen des Anspruchs 1. Die Unteransprüche geben vorteilhafte Ausgestaltungen der Erfindung wieder.

Grundgedanke der Erfindung ist es, eine Windenergieanlage bereitzustellen, bei der der Rotor aus einer ersten Position, die zur Energiegewinnung eine zumindest annähernd horizontale Ausrichtung der Rotorachse x aufweist, in eine zweite Position verfahren werden kann, in der die Windenergieanlage vor Schäden durch zu hohe auf die Anlage einwirkende aerodynamische Windlasten geschützt ist. Erfindungsgemäß nimmt der Rotor in der zweiten Position (Parkposition) die Stellung vergleichbar eines bei einem Helikopter mit zumindest annähernd senkrecht angeordneter Rotorachse ein.

Das dafür erforderliche Kippen der Rotorachse x um ca. 90° geschieht durch das 180°-Verschwenken von zwei Elementen in einer Schwenkebene, die zwischen der zumindest annähernd horizontal ausgerichteten Rotortachse x in der ersten Position und der senkrecht verlaufenden Turmachse y angeordnet ist.

Bevorzugt liegt dabei die Schwenkebene, in der der Rotor gegenüber dem Turm verschwenkt wird, in der Winkelhalbierenden zwischen der zumindest annähernd horizontal ausgerichteten Rotorachse x in der ersten Position und der senkrecht verlaufenden Turmachse y, wobei sich besonders bevorzugt die Rotorachse x und die Turmachse y in der Schwenkebene schneiden. Dadurch wird sichergestellt, dass die Rotorachse x und die Turmachse y in der Parkstellung fluchtend ausgerichtet sind.

Weiterhin ist vorgesehen, dass das Verschwenken des Rotors erst bei Überschreiten einer gemessenen oder einer vorbestimmten Windgeschwindigkeit bewirkt wird, wobei es sich versteht, dass das Verschwenken auch manuell, beispielsweise von einer Leitzentrale aus gesteuert werden kann, wenn zu. B. sich die Einwirkung eines Zyklons androht. Hierbei können beispielsweise auch mehrere zu einer Gruppe zusammengefasste Windenergieanlagen gemeinsam gesteuert werden.

Die Energiewandlungseinheit der Windenergieanlage weist bevorzugt ein Rotorlager, ein Getriebe, einen Generator und eine Bremse auf. Wobei der Rotor mit nur einem Rotorblatt und einem Gegengewicht besonders bevorzugt ist.

Schließlich weist die Windenergieanlage nach der Erfindung in einer bevorzugten Ausgestaltung auch Energie speichernde Mittel auf, die einen Teil der während des Betriebs der Anlage erzeugten Energie speichern und für die Schwenkbewegung des Rotors zur Verfügung stellen, wenn die Anlage bereits abgeschaltet ist oder das Netz nicht mehr zur Verfügung steht und der Rotor aus der ersten Position in die zweite Position verbracht werden soll.

Alternativ dazu kann noch ein durch einen Verbrennungsmotor getriebenes Notstromaggregat die erforderliche Energie für den Schwenkvorgang zur Verfügung stellen.

Die Erfindung wird anhand von Zeichnungen näher erläutert. Es zeigen:

Fig. 1      eine Darstellung des erfindungsgemäßen Prinzips zum Schutz der Windenergieanlage vor durch extrem Windlasten verursachter Schäden,

Fig. 2      eine schematische Darstellung eines besonders bevorzugten Ausführungsbeispiels einer Offshore-Windenergieanlage nach der Erfindung und

Fig. 3      eine schematische Darstellung eines beispielhaften zur Durchführung der erfindungsgemäßen Schwenkbewegung erforderlichen Schwenkmechanismus.

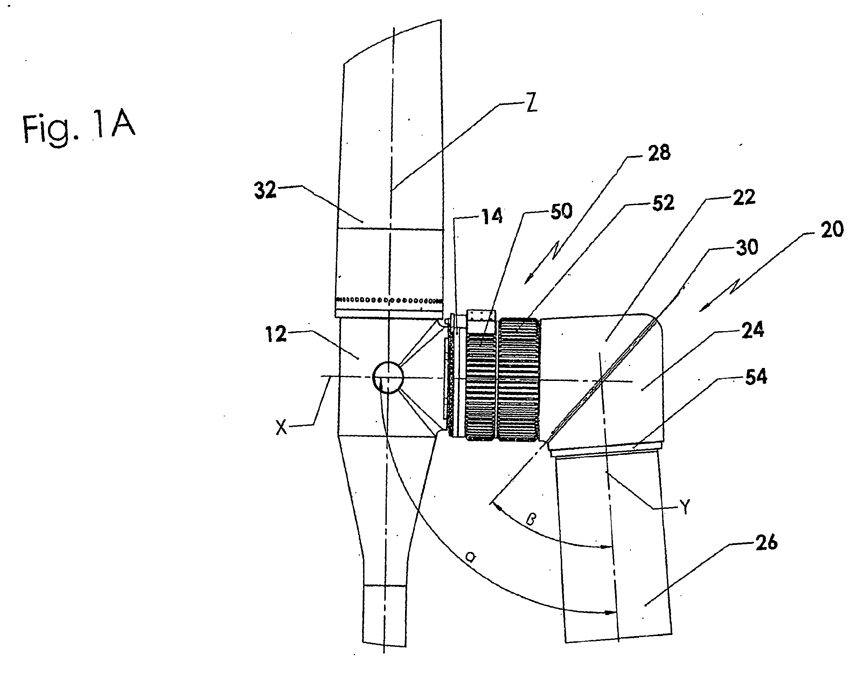

Fig. 1 A zeigt eine das erfindungsgemäße Prinzip zum Schutz von Windenergieanlagen vor durch extreme Windlasten verursachte Schäden erläuternde schematische Darstellung anhand eines zweiteiligen Kopfträgers 20. Der Kopfträger 20 besteht aus zwei einzelnen, voneinander unabhängigen Elementen 22, 24, die in einer Schwenkebene 30 derart miteinander verbunden sind, dass das eine Element 22 gegen das andere Element 24 verschwenkbar ist. Das Element 24 ist mit dem Turm 26 der Windenergieanlage über ein Vertikallager 54 verbunden. Das Element 22 ist mit der Energiewandlungseinheit 28 verbunden.

Die Energiewandlungseinheit 28 besteht in diesem bevorzugten Beispiel aus einer Rotorwelle 14, die in einem nicht gezeigten Rotorlager gelagert ist, einem Getriebe 50 und einem Generator 52. Die Energiewandlungseinheit 28 kann aber auch nur aus einem Rotorlager und einem Generator 52 bestehen.

Die Schwenkebene 30, in der die beiden Elemente 22, 24 im gezeigten Beispiel gegeneinander verschwenkbar sind, wird im vorliegenden Fall durch die Winkelhalbierende zwischen der zumindest annähernd horizontal ausgerichteten Rotorachse x und der senkrechten Turmachse y gebildet. Bevorzugter Weise ist die Anordnung der beiden Achsen x, y so gewählt, dass sie sich in der Schwenkebene 30 schneiden. Dadurch ist gewährleistet, dass die Rotorachse x in der zweiten Position mit der Turmachse y in einer Flucht liegt. Die Elemente 22, 24 müssen jedoch nicht identisch, sondern können vielmehr auch unterschiedlich ausgebildet sein, solange gewährleistet ist, dass das Element 22 auf dem Element 24 schwenken kann. Üblicherweise ist der Winkel $\alpha$ zwischen der Turmachse y und der Rotorachse x in dem Bereich 90° bis 98°. Damit ergibt sich ein vorteilhafter Winkel $\beta$ für die Schwenkebene 30 von 45° bis 49°.

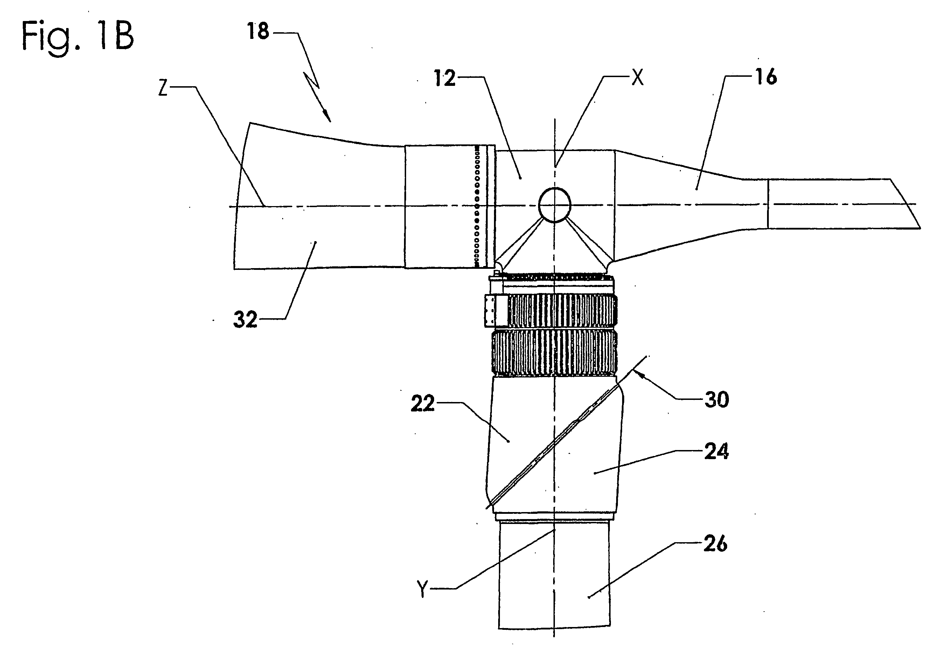

Die Fig. 1B zeigt die Windenergieanlage in der zweiten Position und einer Verdrehung des Elementes 22 gegenüber dem Element 24 um 180°.

Da das Element 22 als Bestandteil einer Gondel einer Windenergieanlage den Rotor 18 der Windenergieanlage trägt, wird der Rotor 18 durch Drehung des Elements 22 aus einer ersten Position, die üblicherweise zur Energiegewinnung eingenommen wird, in eine zweite Position verschwenkt werden, bei der die Blattlängsachse z der an dem Rotor 18 befestigten Rotorblätter 32 nicht mehr in einer zumindest annähernd vertikalen Ebene, sondern zumindest annähernd horizontal ausgerichtet sind (Helikopter-Stellung). Dabei ist der Rotor 18 der erfindungsgemäßen Windenergieanlage im gezeigten Beispiel ein Einblattrotor 18 mit einer Rotornabe 12, einem einzigen Rotorblatt 32 und einem Rotorblatt-Gegengewicht 16.

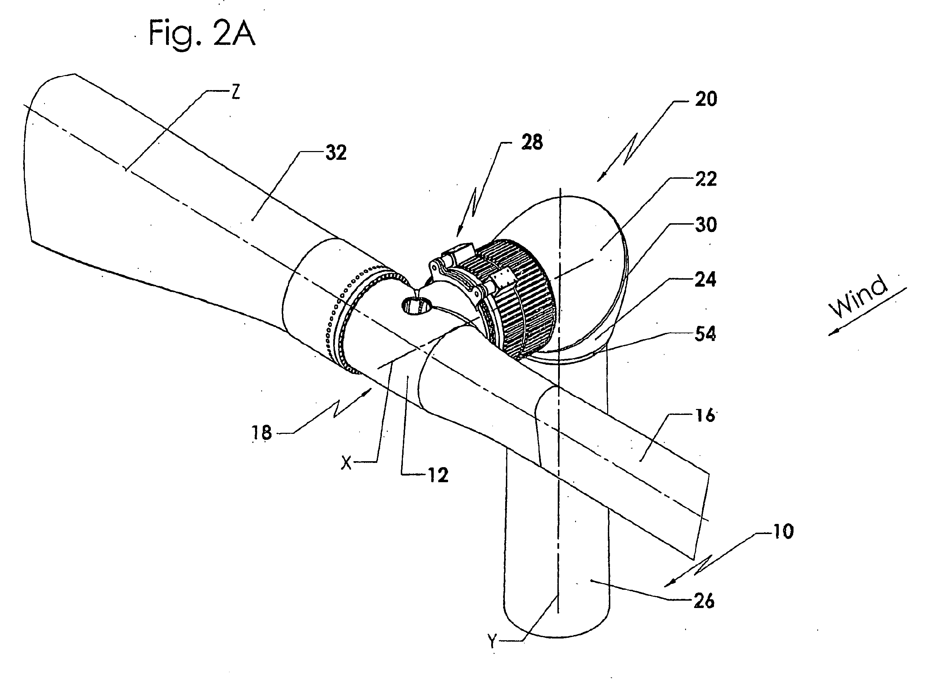

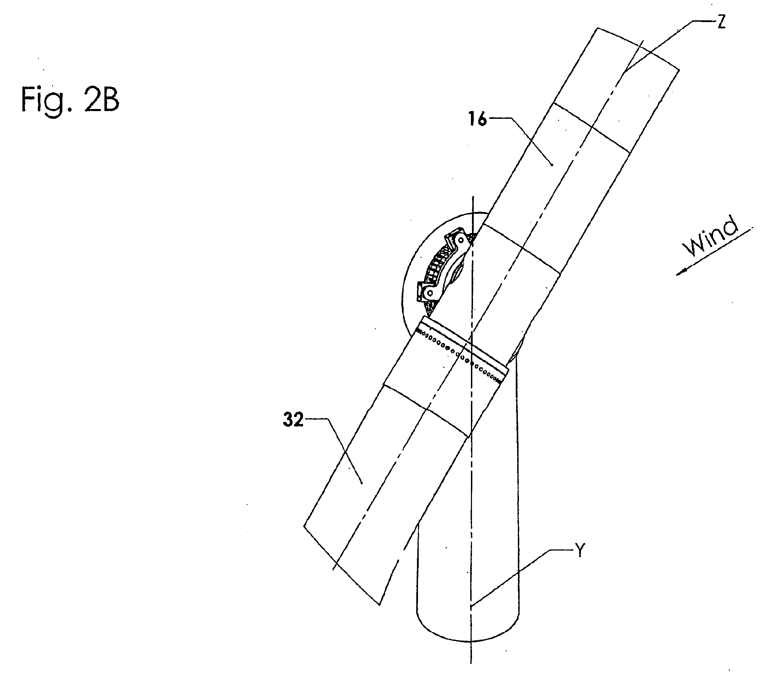

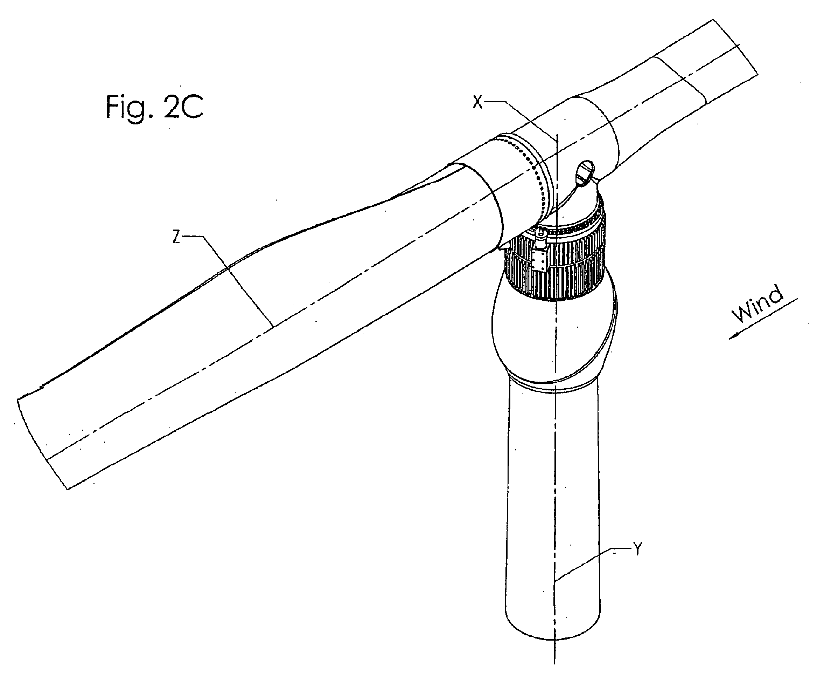

Fig. 2 verdeutlicht die zur Erläuterung anhand von Fig. 1 angestellten Überlegungen in Form eines besonders bevorzugten Ausführungsbeispiels einer Offshore-Windenergieanlage 10 mit einem Einblatt-Rotor 18. Die Offshore-Windenergieanlage 10 besteht aus einem auf einer Gründung befestigten Turm 26 und einer darauf angeordneten Gondel, die - wie in Fig. 1 dargestellt - aus zwei Elementen 22, 24 und der Energiewandlungseinheit 28 besteht, wobei das Element 24 mit dem Turm 26 der Windenergieanlage verbunden ist. Dabei wird das Element 24 bevorzugt drehbar mit dem Turm 26 über eine Vertikallagerung 54 verbunden sein, um die Rotorachse x gegen die mittlere Windrichtung ausrichten zu können.

Das den Rotor 18 tragende Element 22 ist in der Schwenkebene 30 schwenkbar mit dem Element 24 verbunden.

Der Rotor 18 der erfindungsgemäßen Windenergieanlage wird in einer ersten Position zur Energiegewinnung die in Fig. 2A gezeigte Stellung einnehmen, sodass die Rotorachse x anwähernd horizontal ausgerichtet ist. Bei hohen Windgeschwindigkeiten, die zu Beschädigungen an der Windenergieanlage führen können, wird der Rotor 18 zunächst in einer horizontalen Blattstellung gebremst, danach wird das Element 22 analog zu dem in Fig. 1 gezeigten Beispiel gegenüber dem Element 24 verschwenkt, sodass der Rotor 18 aus der in Fig. 2A gezeigten ersten Position in die in Fig. 2C gezeigten zweiten Position verfahren wird, wobei im gezeigten Beispiel das eine Rotorblatt 32 des Rotors 18 zusätzlich in Lee-Stellung gegenüber dem Turm verbracht wurde.

Mit dieser horizontal ausgerichteten Blattlängsachse z in der Leeseite zur Turmachse y bzw. Rotorachse x kann das eine Rotorblatt bei einem Taifun nicht mehr quer zur Blattlängsachse z angeströmt werden. Vielmehr wird der Rotor 18 nur von der Seite des Gegengewichtes 16 entlang der Blattlängsachse z angeströmt. Durch die freie Drehbarkeit des Rotors 18 um die Rotorachse x wird sich das Rotorblatt 32 bei Windrichtungsänderungen immer dieser Richtung nachführen, so dass das Rotorblatt 32 nie quer zur Blattlängsachse z angeströmt werden kann und damit die zerstörerische Anströmung vermieden wird. Die Fig. 2B zeigt eine Zwischenposition nach ca. 90° Schwenkung.

Für diese Schwenkbewegung müssen alle mit dem Rotor 18 mechanisch verbundenen Elemente, z. B. Rotorlager, Getriebe 50 und Generator 52, ebenfalls geschwenkt werden. Die beiden Elemente 22, 24 sind zum Ausführen der Schwenkbewegung bevorzugt über eine Gleitlagerung miteinander verbunden. Es kann aber auch ein Kugellager vorgesehen sein.

Weiterhin weist die erfindungsgemäße Windenergieanlage mindestens einen Sensor zum Erfassen der Windgeschwindigkeit auf, wobei besonders bevorzugt eine Steuerung vorgesehen ist, die bei Überschreiten einer vorbestimmten Windstärke die Abbremsung des Rotors 18 bevorzugt in horizontaler Blattstellung und danach das Schwenken des Elements 22 aus der ersten Position in die zweite Position veranlasst. Werden mehrere Anlagen in einem Windpark genutzt, kann auch vorgesehen sein, dass nur einige Sensoren vorgesehen sind und die gemessenen Daten jeweils an die im Windpark angeordneten Windenergieanlagen weitergeleitet werden, sodass einzelne oder auch Gruppen von Windenergieanlagen durch Verbringen des Rotors 18 aus der ersten in die zweite Position abgeschaltet werden können. Die Abschaltung eines gesamten Windparks kann aber auch bei Erkennen von herannahenden Extrembedingungen z. B. eines Zyklons durch einen zentralen Steuerungsbefehl manuell aufgelöst werden.

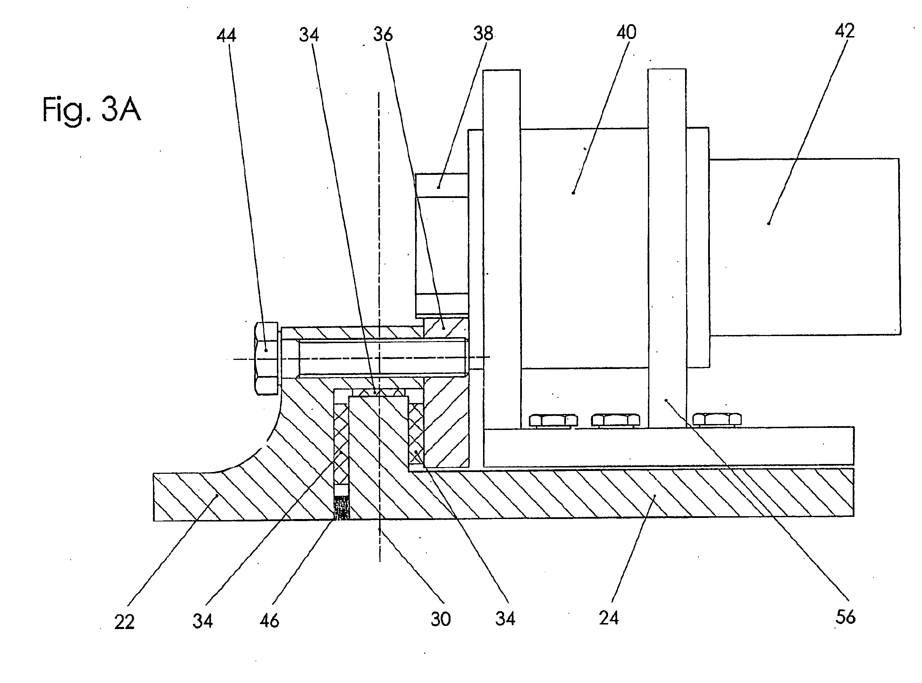

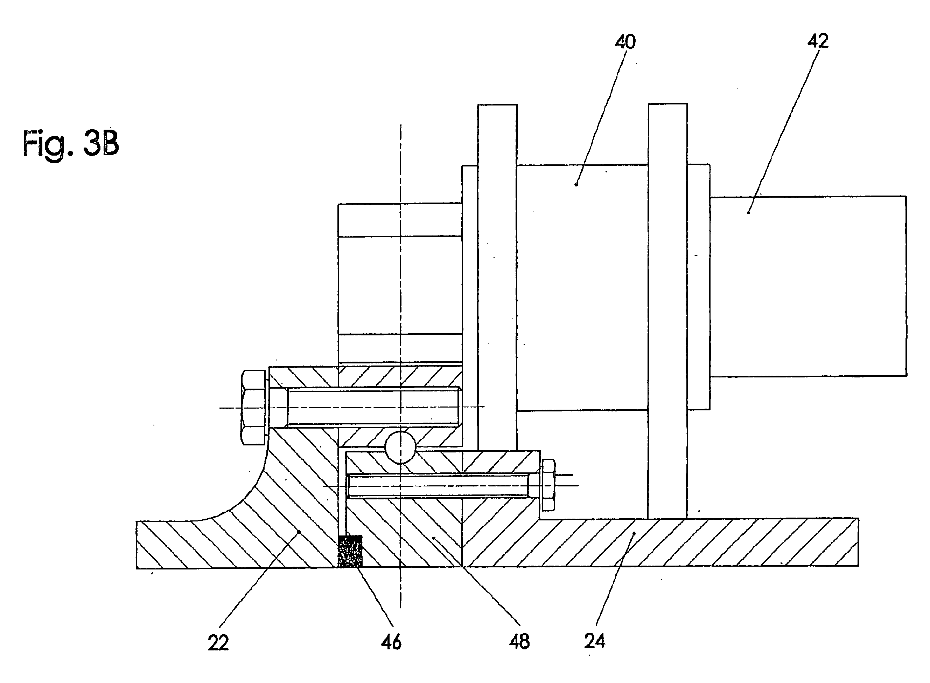

Fig. 3 zeigt die Schwenklagerung die in der Schwenkebene 30 angeordnet ist in der Ausführung als Gleitlagerung (A) und mit einer Kugeldrehverbindung (B).

In Fig. 3A ist das Element 24 mit drei Gleitlagerelementen 34 zur Aufnahme der zu übertragenden Axial- und Radiallasten ausgerüstet. Diese werden über das Element 22 und der Klemmplatte 36 mit den Schrauben 44 verspannt. Die Klemmplatte 36 ist an der. Innenseite mit einer Verzahnung ausgestattet. In diese Innenverzahnung greift das Ritzel 38 ein, dass über das Getriebe 40 und den Antriebmotor 42 die Drehung des Elementes 22 gegenüber dem Element 24 ermöglicht. Das Getriebe 40 ist über dem Getriebeträger 56 mit dem Element 24 fest verbunden. Zum Witterungsschutz der Gleitlagerung sind die Elemente 22 und 24 mit der Dichtung 46 nach Außen abgedichtet.

Die Fig. 3B zeigt den schematischen Aufbau einer Schwenklagerung mit einer Kugeldrehverbindung 48. Dabei sind die beiden Drehlagerringe mit den Elementen 22, 24 verbunden. Ein Dichtelement 46 schützt auch hier die Lagereinheit vor äußeren Witterungseinflüssen. Die Antriebseinheit, bestehend aus Getriebe 40 und Antriebsmotor 42, ist gleich aufgebaut wie bei der Gleitlagerung, wobei vorzugsweise die erforderliche Innenverzahnung am Innenring der Kugeldrehverbindung angebracht ist.

Zusätzlich muss die Schwenklagerung über mindestens zwei Endlagenschalter zur Erfassung der ersten und der zweiten Position verfügen, um den Antriebsmotor 42 entsprechend abzuschalten oder die Drehrichtung des Antriebmotors 42 umkehren zu können.

Schließlich kann für den Fall, dass mit einem Netzausfall zu rechnen ist, die Anlage mit einem Notstromaggregat oder einem Batteriespeicher ausgerüstet sein, die genügend Energie zum Ausführen der Schwenkbewegung liefern. Bevorzugt sind diese energiespeichernden Mittel derart eingerichtet, dass diese während des laufenden Betriebes der Windenenergieanlage aufgeladen werden, um die Energieversorgung des wenigstens einen Antriebmotors 42 während des Abschaltvorgangs zu gewährleisten.

**Patentansprüche**

1. Windenergieanlage (10) mit einem vertikalen Turm (26) und einem auf dem Turm (26) befestigten, wenigstens ein Rotorblatt (32) aufweisenden Rotor (18) mit einer horizontal ausgerichteten Achse und einer Energiewandlungseinheit (28), die Windenergieanlage ist
**gekennzeichnet durch**
ein Schwenklager, dessen Schwenkebene (30) zwischen der horizontal ausgerichteten Rotorachse (x) und der senkrecht verlaufenden Turmachse (y) liegt, wobei sich die Rotorachse (x) und die Turmachse (y) in der Schwenkebene (30) schneiden, und wenigstens einen Motor (42) zum Verschwenken des Rotors (18) gemeinsam mit der Energiewandlungseinheit (28) aus einer ersten Position, in der die Rotorachse (x) horizontal ausgerichtet ist, in eine zweite Position, in der die Rotorachse (x) vertikal ausgerichtet ist.

2. Windenergieanlage (10) nach Anspruch 1, **dadurch gekennzeichnet, dass** die Schwenkebene in der Winkelhalbierenden zwischen der Rotorachse (x) in der ersten Position und der senkrecht verlaufenden Turmachse (y) liegt.

3. Windenergieanlage (10) nach einem der vorhergehenden Ansprüche **gekennzeichnet durch** Mittel, die das Verschwenken des Rotors (18) bei Überschreiten einer gemessenen oder einer vorbestimmten Windgeschwindigkeit bewirken.

4. Windenergieanlage (10) nach einem der vorhergehenden Ansprüche, **dadurch gekennzeichnet, dass** ein Teil der während des Betriebs der Anlage gewonnenen Energie speichernden Mitteln zur Energieversorgung des wenigstens einen Motors (42) zugeführt wird.

5. Windenergieanlage (10) nach einem der vorhergehenden Ansprüche, **dadurch gekennzeichnet, dass** die Schwenklagerung jeweils einen der ersten und der zweiten Position zugeordneten Endlagenschalter aufweist.

6. Windenergieanlage (10) nach einem der vorhergehenden Ansprüche, **dadurch gekennzeichnet, dass** die Energiewandlungseinheit (28) ein Rotorlager, einen Generator (52), ein Getriebe (50) und eine Bremse aufweist.

7. Windenergieanlage (10) nach einem der vorhergehenden Ansprüche, **dadurch gekennzeichnet, dass** der Rotor (18) ein Einblattrotar mit einem Rotorblatt (32) und einem Gegengewicht (16) ist.

**Claims**

1. A wind power plant (10) comprising a vertical tower (26) and a rotor (18) with a horizontal axis that is mounted on the tower (26) and has at least one rotor blade (32), and a power conversion unit (28), the wind power plant is
**characterized by**
a swivel bearing, the swiveling plane (30) of which lies between the horizontal rotor axis (x) and the vertical tower axis (y), the rotor axis (x) and the tower axis (y) intersecting in the swivel plane (30), and at least one motor (42) for swiveling the rotor (18), along with the power conversion unit (28), from a first position in which the rotor axis (x) extends in a horizontal direction into a second position in which the rotor axis (x) extends in a vertical direction.

2. The wind power plant (10) according to Claim 1, **characterized in that** the swivel plane lies in the angle bisector between the rotor axis (x) in the first position and vertically running tower axis (y).

3. The wind power plant (10) according to one of the preceding claims, **characterized by** means that cause the rotor (18) to swivel when a measured or a predetermined wind speed is exceeded.

4. The wind power plant (10) according to one of the preceding claims, **characterized in that** part of the power generated during the operation of the plant is fed to storing means for the power supply of the at least one motor (42).

5. The wind power plant (10) according to one of the preceding claims, **characterized in that** the swivel bearing has in each case a limit position switch that assigned to the first and the second position.

6. The wind power plant (10) according to one of the preceding claims, **characterized in that** the power conversion unit (28) has a rotor bearing, a generator (52), a gearbox (50), and a brake.

7. The wind power plant (10) according to one of the preceding claims, **characterized in that** the rotor (18) is a single-blade rotor with one rotor blade (32) and a counterweight (16).

**Revendications**

1. Centrale à énergie éolienne (10) avec une tour verticale (26) et un rotor (18), présentant au moins une pale de rotor (32) et fixé sur la tour (26) ; rotor avec un axe à orientation horizontale et une unité de conversion de l'énergie (28), la centrale à énergie éolienne
   **caractérisée par le fait**
   **qu'**un palier de pivotement, dont le niveau de pivotement (30) se situe entre l'axe du rotor (x), à orientation horizontale, et l'axe de la tour (y), à orientation perpendiculaire, où l'axe du rotor (x) et l'axe de la tour (y) se coupent dans le niveau de pivotement (30), et
   au moins un moteur (42) pour le pivotement du rotor (18) ensemble avec l'unité de conversion de l'énergie (28) à partir d'une première position, dans laquelle l'axe du rotor (x) est orienté horizontalement, vers une deuxième position, dans laquelle l'axe du rotor (x) est orienté verticalement.

2. Centrale à énergie éolienne (10) selon revendication 1, **caractérisée en ce que** le niveau de pivotement dans la bissectrice se situe entre l'axe du rotor (x) dans la première position et l'axe de la tour (y) à orientation perpendiculaire.

3. Centrale à énergie éolienne (10) selon l'une des revendications précédentes, **caractérisée par le fait qu'**il existe des moyens, qui font pivoter le rotor (18) en cas de dépassement d'une vitesse du vent mesurée ou prédéfinie.

4. Centrale à énergie éolienne (10) selon l'une des revendications précédentes, **caractérisée par le fait, qu'**une partie de l'énergie, obtenue lors de l'exploitation de l'installation, est amenée vers des moyens d'accumulation pour l'alimentation en énergie d'au moins un moteur (42).

5. Centrale à énergie éolienne (10) selon l'une des revendications précédentes, **caractérisée par le fait, que** le roulement pivotant présente un interrupteur de fin de course, respectivement affecté à la première et la deuxième position.

6. Centrale à énergie éolienne (10) selon l'une des revendications précédentes, **caractérisée par le fait, que** l'unité de conversion de l'énergie (28) présente un palier de rotor, une génératrice (52), un engrenage (50) et un frein.

7. Centrale à énergie éolienne (10) selon l'une des revendications précédentes, **caractérisée par le fait, que** le rotor (18) est un rotor à une pale avec une pale de rotor (32) et un contrepoids (16).

Fig. 1A

Fig. 1B

Fig. 2A

EP 2 140 136 B1

Fig. 2B

Fig. 2C

Fig. 3A

EP 2 140 136 B1

Fig. 3B

EP 2 140 136 B1

40

42

22

46

48

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5746576 A
- DE 10058076 A1
- EP 0709571 A2